# EUROPEAN PATENT SPECIFICATION

(11) **EP 0 573 994 B1**
(45) Date of publication and mention of the grant of the patent: **21.01.1998**
(21) Application number: 93109313.2
(22) Date of filing: 09.06.1993
(51) Int. Cl.: F21M 3/18, F21M 3/14, B60Q 1/20

(54) **Projector type lighting device**
Scheinwerfer ähnliche Beleuchtungseinrichtung
Dispositif d'éclairage du type phare

(30) Priority: 12.06.1992 JP 177724/92
(43) Date of publication of application: 15.12.1993
(73) Proprietor: Stanley Electric Co., Ltd., Meguro-ku Tokyo 153 (JP)
(72) Inventor: Sekiguchi, Tsuneo, Adachi-ku, Tokyo (JP)
(74) Representative: Dr. Elisabeth Jung Dr. Jürgen Schirdewahn Dipl.-Ing. Claus Gernhardt

(56) References cited:
- EP-A- 0 381 851
- EP-A- 0 429 922

## Description

### BACKGROUND OF THE INVENTION

### 1. Field of the Invention

The present invention relates generally to a projector type lighting device such as a fog lamp or the like each employable for a vehicle. More particularly, the present invention relates to improvement of a projector type lighting device of the foregoing kind of which light distributing properties are variably determined depending on the contour of a shading plate disposed in the projector type lighting device.

### 2. Background Art

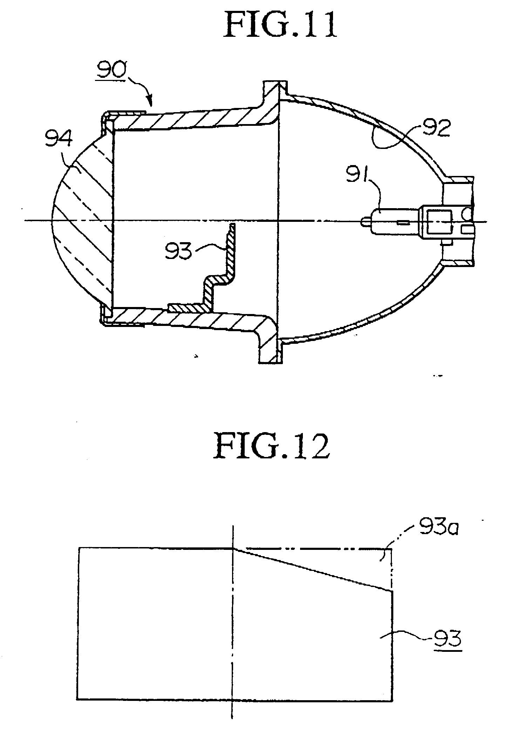

To facilitate understanding of the present invention, a typical conventional projector type lighting device will briefly be described below with reference to Fig. 11 and Fig. 12.

As shown in Fig. 11, a conventional projector type lighting device (hereinafter referred to simply as a lighting device) 90 includes a light source 91 which is located at one focus of a reflective mirror 92 having a revolving parabolic surface, a composite parabolic surface or the like. For example, in case that the reflective mirror 92 has a revolving parabolic surface, as light is reflected at the reflective mirror 92, the reflected light is emitted toward the other focus of the reflective mirror 92 at which it converges in the form of a light beam having a substantially circular sectional shape.

When the reflected light is projected in the emitting direction via a projection lens 94 on the assumption that a lower half of light beam is covered with a shading plate 93 to generate another light beam having a sectional shape corresponding to a half of semicircle having a lower arc, the projected image is inverted to exhibit a sectional shape corresponding to a half of semicircle having an upper arc. In other words, the resultant light beam does not contain any upward orienting light component but the lighting device 90 exhibits light distribution properties preferably employable for a light beam to be emitted to a vehicle running in the opposite direction to pass by a vehicle having the lighting device 90 mounted thereon. With this light beam, however, it is difficult for a driver to visually recognize a road sign or the like standing upright on a road shoulder. For example, in case that the lighting device 90 is employed for a vehicle running along the left-hand side of a road, a part of the shading plate 93 is cut out at the upper right end to form an asymmetrical portion 93a having a predetermined inclination angle (usually set to 15 degrees), in order to obviate the foregoing malfunction, as shown in Fig. 12. With this construction, the light beam generated by the lighting device 90 includes an upward orienting light component on the left-hand side and the lighting device 90 exhibits asymmetrical light distribution properties, resulting in the road sign or the like standing upright on the road shoulder being visually recognized by the driver.

In case that a vehicle having head lamps each exhibiting asymmetrical light distribution properties mounted thereon starts to run from a certain country, e.g., England and visits another country having different traffic rules, e.g., France, when a light beam containing an upward orienting light component attributable to the formation of the asymmetrical portion 93a is emitted toward a vehicle running in the opposite direction, the emitted light beam is unpleasantly recognized by a driver in the last-mentioned vehicle as dazzling light.

In case that a reflective mirror having a revolving parabolic surface is employed for each headlight, it is possible to prevent or reduce the invasion of the dazzling light in driver's eyes in the vehicle running in the opposite direction by adhesively covering the cut part of the front lens effective for generating an upward orienting light component with an opaque tape. However, in case of the conventional lighting device 90 constructed in the above-described manner, since it is practically impossible to shift the present light distribution properties to other one merely by adhesively covering any part of the projecting lens 94 with an opaque tape, a significant problem to be solved particularly with respect to the conventional lighting device 90 is concerned with the generation of the dazzling light which is unpleasantly recognized by a driver in a vehicle running in the opposite direction.

Furthermore, from EP-A-0 381 851 there is known a projector type lighting device as defined by the preamble of claims 1, 3 and 5. In this known device as a means for moving the auxiliary shutter between the two positions described in said reference, a spring is used. However, the strength of the elasticity of said spring will change during its use and, moreover, the fixability is determined by such strength. Accordingly, it seems to be quite difficult to construct such a spring so that it will not change its elasticity and strength with the course of time. Moreover, the danger exists that under the influence of vibrations the auxiliary shutter is moved from one position to the other inadvertently, which cannot be accepted.

EP-A-0 429 922 shows a projector type lighting device comrising a fixed main shading plate and an auxiliary shading plate movable between two end positions. In each position said auxiliary shading plate is held by the force of a compression spring acting upon a pin of said auxiliary shading plate which pin is guided within an arcuate slot formed in said main shading plate.

Accordingly, it is an object of the present invention to provide a projector type lighting device of the type in question, in which the means for moving or setting and fixing the respective shutter are of simple and safe construction.

Said object is achieved by projector type lighting devices as defined by claim 1, 3 and 5, respectively.

By using screw means, the setting and fixing is easily and safely done. In addition, said constructions are more simple than the constructions according to the cited references, thus the assembling and the costs therefore are superior to those according to said references.

Other objects, features and advantages of the present invention will become apparent from reading the following description which has been made in conjunction with the accompanying drawings.

### BRIEF DESCRIPTION OF THE DRAWINGS

The present invention is illustrated in the following drawings in which:
Fig. 1 is a sectional view of a projector type lighting device constructed according to a first embodiment of the present invention;
Fig. 2 is a fragmentary front view of the lighting device shown in Fig. 1, particularly illustrating an auxiliary shutter in the operative state that a vehicle runs along the left-hand side of a road;
Fig. 3 is a fragmentary front view of the lighting device shown in Fig. 1, particularly illustrating the auxiliary shutter in the operative state that the vehicle runs along the right-hand side of the road;
Fig. 4 is a sectional view of a projector type lighting device constructed according to a second embodiment of the present invention;
Fig. 5 is a fragmentary front view of the lighting device shown in Fig. 4, particularly illustrating an auxiliary shutter in the operative state that a vehicle runs along the left-hand side of a road;
Fig. 6 is a fragmentary front view of the lighting device shown in Fig. 4, particularly illustrating the auxiliary shutter in the operative state that the vehicle runs along the right-hand side of the road;
Fig. 7 is a fragmentary front view of the lighting device shown in Fig. 4, particularly illustrating by way of example a display plate attached to the lighting device;
Fig. 8 is a sectional view of a projector type lighting device constructed according to a third embodiment of the present invention;
Fig. 9 is a fragmentary front view of the lighting device shown in Fig. 8, particularly illustrating a shading plate in the operative state that a vehicle runs along the left-hand side of a road;
Fig. 10 is a fragmentary front view of the lighting device shown in Fig. 8, particularly illustrating the shading plate in the operative state that the vehicle runs along the right-hand side of the road;
Fig. 11 is a sectional view of a conventional projector type lighting device; and
Fig. 12 is a fragmentary front view of the conventional lighting device shown in Fig. 11, particularly illustrating a shading plate.

### DETAILED DESCRIPTION OF THE PREFERRED EMBODIMENTS

The present invention will now be described in detail hereinafter with reference to the accompanying drawings which illustrate a few preferred embodiments thereof.

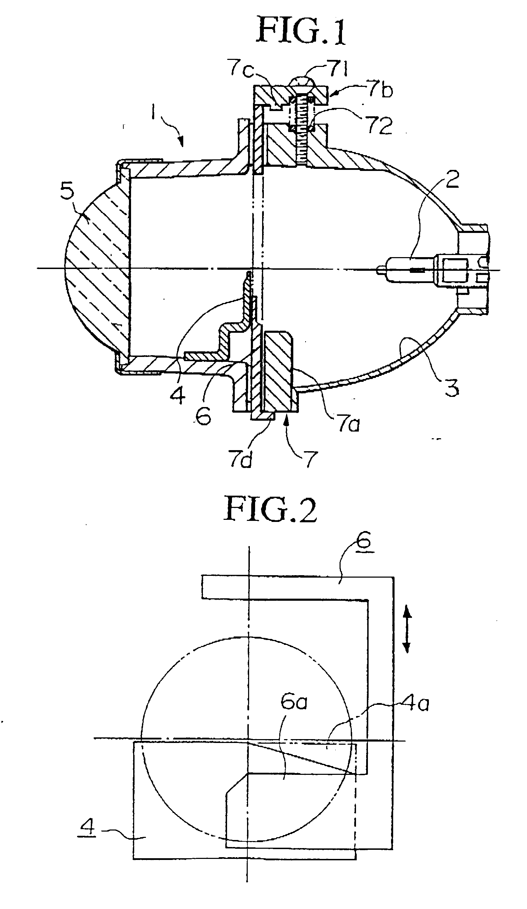

First, a projector type lighting device constructed according to a first embodiment of the present invention will be described below with reference to Fig. 1 to Fig. 3.

In Fig. 1, the projector type lighting device (hereinafter referred to simply as a lighting device) is designated by reference numeral 1. On the assumption that a vehicle having the lighting device 1 mounted thereon runs along the left-hand side of a road, the lighting device 1 is composed of a reflective mirror 3 having a revolving parabolic surface, a light source 2 disposed at one focus of the reflective mirror 3, a shading plate 4 having an asymmetrical portion 4a formed on the right-hand side of the lighting device (as seen in Fig. 2), and a projecting lens 5 disposed at the foremost end of the lighting device 1, in order to illuminate a left-hand road shoulder part with the lighting device 1 in the same manner as the conventional lighting device, with the exception that an auxiliary shutter 6 is disposed directly adjacent to the shading plate 4, and moreover, a sliding unit 7 is arranged for slidably linearly displacing the auxiliary shutter 6 in the upward/downward direction along the shading plate 4 to reach two positions, i.e., an uppermost position and a lowermost position.

Here, the structure of each of the auxiliary shutter 6 and the actuating unit 7 will be described below.

The auxiliary shutter 6 is constructed of an opaque plate-shaped member made of a metallic material or a synthetic resin. As shown in Fig. 2, the auxiliary shutter 6 includes a shading portion 6a having a large area enough to cover the asymmetrical porion 4a of the shading plate 4 with the shading portion 6a.

The actuating unit 7 is composed of a holder 7a having a guide groove formed to hold the auxiliary shutter 6 thereon so as to allow the auxiliary shutter 6 to be slidably displaced in the upward/downward direction and an actuating portion 7b. In detail, the actuating portion 7b includes a screw 71 and a coil spring 72 as essential components to displace the auxiliary shutter 6 in the upward/downward direction with the aid of the holder 7a by rotating the screw 71. In addition, the actuating unit 7 includes an upper limit stopper 7c and a lower limit stopper 7d for defining two positions of the auxiliary shutter 6, i.e., the uppermost position on the upper end side and the lowermost position on the lower end side of the auxiliary shutter 6 to be assumed when the latter 6 is slidably displaced in the upward/downward direction.

Fig. 2 shows the auxiliary shutter 6 in the operative state that the auxiliary shutter 6 is displaced in the downward direction by actuating the sliding unit 7 to reach the lowermost position thereof. While the foregoing state is maintained, the shading portion 6a of the auxiliary shutter 6 is parted away from the asymmetrical portion 4a of the shading plate 4, whereby the auxiliary shutter 6 has no effect on the light distribution properties of the lighting unit 1. Thus, at this time, the lighting device 1 exhibits original light distribution properties, causing an upward orienting light component to be emitted from the lighting device 1 toward the left-hand road shoulder side.

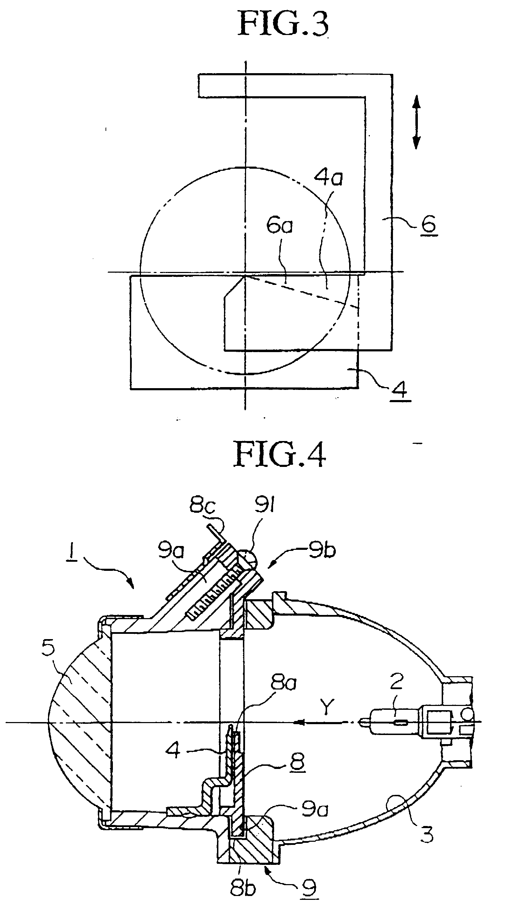

Fig. 3 shows the auxiliary shutter 6 in the operative state that the auxiliary shutter 6 is displaced to reach the uppermost position thereof. While the foregoing operative state is maintained, the asymmetrical portion 4a of the shading plate 4 is fully covered with the shading part 6a of the auxiliary shutter 6. At this time, the lighting device 1 exhibits the same light distributing properties as those in case that no asymmetrical portion is formed on the shading plate 4, i.e., the lighting device 1 emits a light beam having a sectional shape corresponding to a substantially half of semicircle having a lower arc without any possibility that a driver in a vehicle running in the opposite direction is unpleasantly irradiated with dazzling light.

Next, a lighting device constructed according to a second embodiment of the present invention will be described below with reference to Fig. 4 to Fig. 7. Incidentally, same components as those in the first embodiment are represented by same reference numerals.

In contrast with the lighting device 1 constructed according to the first embodiment of the present invention wherein the auxiliary shutter 6 is linearly displaced in the upward/downward direction, in the second embodiment, an auxiliary shutter 8 is turnably displaced in the clockwise/ anticlockwise direction to turn about a center axis of the lighting device 1. The auxiliary shutter 8 includes a shading portion 8a having a substantially sector-shaped contour, and a holder 9a of an actuating unit 9 has an arc-shaped guide groove corresponding to a circular outer diameter portion 8b of the auxiliary shutter 8.

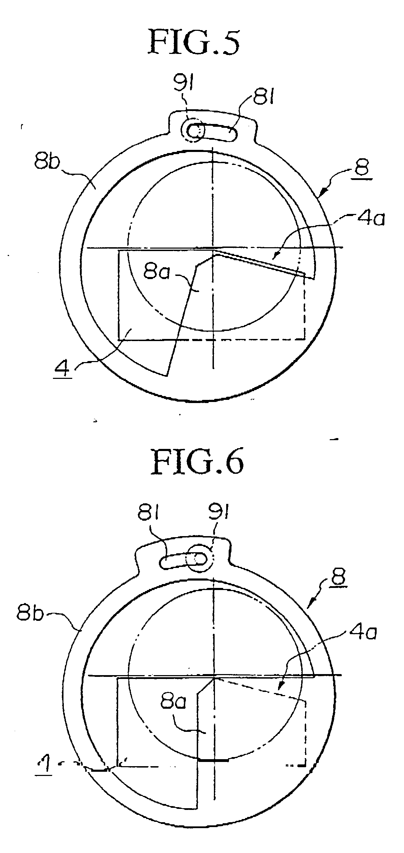

The actuating unit 9b is substantially composed of an arched elongated hole 81 formed through the outer diameter portion 8b of the auxiliary shutter 8 and a screw 91 inserted through the elongated hole 81 and threadably fitted into a threaded hole on the holder 9a so as to stop the turnable displacement of the auxiliary shutter 8. When the screw 91 is immovably tightened at the left-hand end of the elongated hole 81 as shown in Fig. 5, the shading portion 8a of the auxiliary shutter 8 is parted away from an asymmetrical portion 4a of a shading plate 4. On the contrary, when the screw 91 is immovably tightened at the right-hand end of the elongated hole 81 as shown in Fig. 6, the asymmetrical portion 4a of the shading plate 4 is fully covered with the shading portion 8a of the auxiliary shutter 8.

In the second embodiment, when the turnable displacement of the auxiliary shutter 8 is stopped by immovably tightening the screw 91 at the left-hand end of the elongated hole 81 as observed in the Y arrow-marked direction in Fig. 4 (as seen in Fig. 5), the lighting device 1 exhibits light distributing properties preferably employable when a vehicle runs along the left-hand side of a road. On the contrary, when the auxiliary shutter 8 is turned in the anticlockwise direction and the screw 91 is then immovably tightened at the right-hand end of the elongated hole 81 (as seen in Fig. 6), the lighting device 1 does not generate an upward orienting light component, resulting in the same functional and advantageous effects as those described in the first embodiment being obtainable with the lighting device 1.

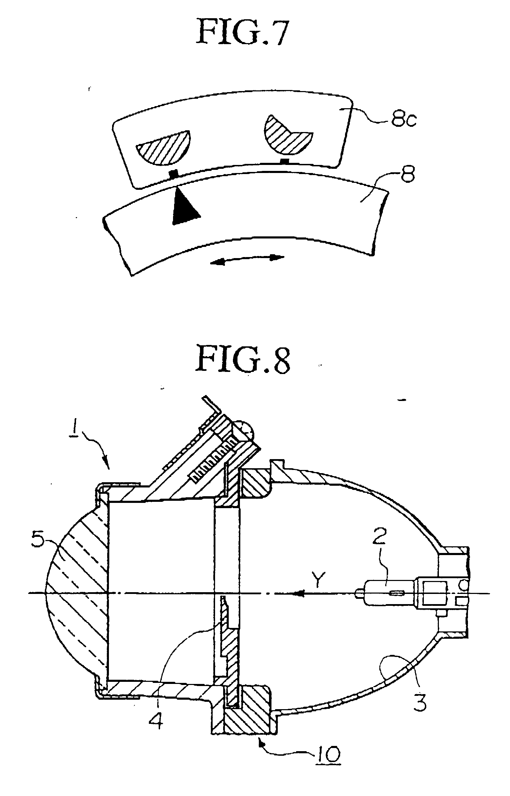

It is recommendable that a display plate 8c as shown in Fig. 7 is fixedly attached to the holder 9a of the actuating unit 9 so as to enable the present operative state of the lighting device 1 to be visually recognized by a driver by utilizing marks on the display plate 8c each showing the present light distribution properties of the lighting device 1 in combination with a triangular mark on the auxiliary shutter 8.

Next, a lighting device 1 constructed according to a third embodiment of the present invention will be described below with reference to Fig. 8 to Fig. 10. Similarly, same components as those in the preceding embodiments are designated by same reference numerals.

In contrast with the first and second embodiments wherein the auxiliary shutter 6 or 8 is used for the lighting device 1, in the third embodiment, a shading plate 4 itself serves as an auxiliary shutter in such a manner as to turn about a center axis of the lighting device 1 in the clockwise/ anticlockwise direction to shift the present light distribution properties of the lighting device 1 to another ones as desired, and vice versa. The shading plate 4 is turnably held by an actuating unit 10 having the substantially same structure as that described in the second embodiment so that it is turned by an angle corresponding to an asymmetrical portion 4a of the shading plate 4 (e.g., 15 degrees) by actuating the actuating unit 10.

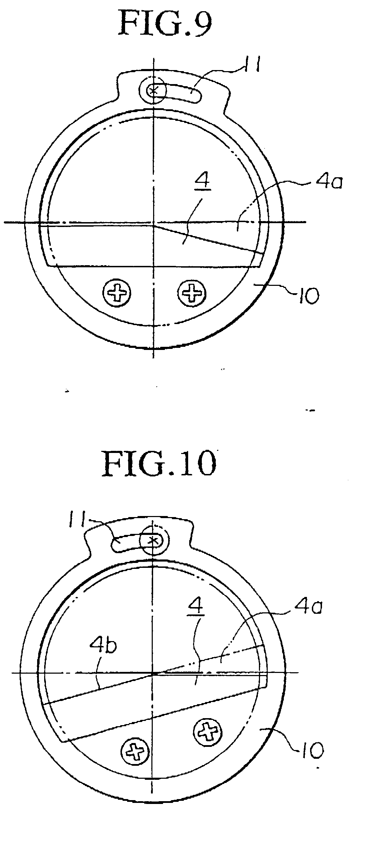

When the turnable displacement of the shading plate 4 is stopped by immovably tightening a screw (not shown) at the left-hand end of an elongated hole 11 (as seen in Fig. 9), the lighting device 1 exhibits light distributing properties preferably employable when a vehicle runs along the left-hand side of a road, resulting in the same functional and advantageous effects as those in the second embodiment being obtainable with the lighting device 1. On the contrary, when the actuating unit 10 is turned in the anticlockwise direction and the screw is then immovably tightened at at the right-hand end of the elongated hole 11 (as seen in Fig. 10), the asymmetrical portion 4a is covered with the shading plate 4 itself. At this time, a left-hand side 4b of the shading plate 4 which has extended in the horizontal direction is inclined in the downward direction by an angle corresponding to the foregoing turnable displacement of the shading plate 4, whereby the shading plate 4 exhibits a contour as if the asymmetrical portion 4a is inversely displaced to the left-hand side.

In other words, the lighting device 1 makes it possible to shift the light distribution properties employable when a vehicle runs along the left-hand side of a road to the light distribution properties employable when the vehicle runs along the right-hand side of the road, and vice versa. Thus, a road sign or the like standing upright on a road shoulder can easily visually be recognized by a driver when his vehicle runs either along the left-hand side of the road or along the right-hand side of the same.

It should be noted that traffic rules applied to a lighting device for a vehicle differ from country to country, and therefore, it is necessary that the lighting device is adequately adjusted so as to conform to the current traffic rules in a certain country because the specification of the lighting device is not always formally approved by a governmental organization in this country merely by inversely shifting the left-hand light distribution properties to the right-hand light distribution properties of the lighting device, and vice versa.

Incidentally, in each of the aforementioned embodiments, a driving unit such as a solenoid or the like may adequately be attached to the lighting device so as to enable a driver to automatically shift the present light distributing properties of the lighting device to another ones as desired, and vice versa, while he sits on his seat in the vehicle.

While the present invention has been described above with respect to three preferred embodiments thereof, it should of course be understood that the present invention should not be limited only to these embodiments but various change or modification may be made without departure from the scope of the present invention as defined by the appended claims.

## Claims

1. Projector type lighting device (1) for a vehicle having predetermined light distribution properties, comprising a reflective mirror (3) having a revolving parabolic surface, a light source (2) located at the focus of said reflective mirror, a shading plate (4) having an asymmetrical portion (4a) formed on one side of said shading plate (4) depending on said predetermined light distribution properties, and a projecting lens (5) located at the foremost end of said projector type lighting device (1),
an auxiliary shutter (6) slidably arranged directly adjacent to said shading plate (4) to slidably move along said shading plate (4) so as to shift the present light distribution properties to another ones as desired, and vice versa, said auxiliary shutter (6) including a shading portion (6a) having a large area enough to cover said asymmetrical portion (4a) of said shading plate (4) therewith when said auxiliary shutter (6) is slidably displaced in the upward direction to reach the uppermost position so as to allow said asymmetrical portion (4a) to become inoperative, characterized by
actuating means (7) for linearly displacing said auxiliary shutter (6) in the upward/downward direction, said actuating means (7) comprising screw means (71) cooperating with a holder (7a) carrying said auxiliary shutter (6) for moving it upward/downward by rotating said screw means (71).

2. Device according to claim 1, characterized in that said auxiliary shutter (6) is rectangularly shaped.

3. Projector type lighting device (1) for a vehicle having predetermined light distribution properties, comprising a reflective mirror (3) having a revolving parabolic surface, a light source (2) located at the focus of said reflective mirror, a shading plate (4) having an asymmetrical portion (4a) formed on one side of said shading plate (4) depending on said predetermined light distribution properties, and a projecting lens (5) located at the foremost end of said projector type lighting device (1), an auxiliary shutter (8) slidably arranged directly adjacent to said shading plate (4) to slidably move along said shading plate (4) so as to shift the present light distribution properties to another ones as desired, and vice versa, said auxiliary shutter (8) including a shading portion (8a) having a large area enough to cover said asymmetrical portion (4a) of said shading plate (4) therewith when said auxiliary shutter (8) is slidably displaced in the upward direction to reach the uppermost position so as to allow said asymmetrical portion (4a) to become inoperative, characterized by
actuating means (9) for turnably displacing said auxiliary shutter (8) in the upward/downward direction, said actuating means (9) comprising an arched elongated hole (81) formed through an outer diameter portion (8b) of the auxiliary shutter (8) and a screw (91) inserted through said elongated hole (81) and threadably fitted into a threadable hole on a holder (9a) of the actuating means (9) so as to fix said auxiliary shutter (8) in a displaced position.

4. Device according to claim 3, characterized in that said auxiliary shutter (8) is round shaped.

5. Projector type lighting device (1) for a vehicle having predetermined light distribution properties, comprising a reflective mirror (3) having a revolving parabolic surface, a light source (2) located at the focus of said reflective mirror, a shading plate (4) having an asymmetrical portion (4a) formed on one side of said shading plate (4) depending on said predetermined light distribution properties, and a projecting lens (5) located at the foremost end of said projector type lighting device (1), characterized in that said shading plate (4) is turnably mounted to slidably move it so as to shift the present light distribution properties to another one as desired, and vice versa, and that an actuating unit (10) is provided, comprising an arched alongated hole (11) formed through an outer diameter portion of the shading plate (4) and a screw inserted through said elongated hole and threadably fitted into a threaded hole on a holder of the actuating unit so as to fix the shading plate (4) in a displaced position.

## Patentansprüche

1. Beleuchtungsvorrichtung (1) des Projektortyps mit vorbestimmten Lichtverteilungseigenschaften für ein Fahrzeug, umfassend
einen reflektierenden Spiegel (3), der eine umlaufende parabolische Fläche hat, eine Lichtquelle (2), die an dem Brennpunkt des reflektierenden Spiegels angeordnet ist, eine Abschirmplatte (4), die einen asymmetrischen Teil (4a) hat, der an einer Seite der Abschirmplatte (4) gebildet ist in Abhängigkeit von den vorbestimmten Lichtverteilungseigenschaften, und eine Projektionslinse (5), die am Vorderende der Beleuchtungsvorrichtung (1) des Projektortyps angeordnet ist,
eine Hilfsabdeckung (6), die direkt neben der Abschirmplatte (4) verschiebbar angeordnet ist, um sich entlang der Abschirmplatte (4) verschiebbar zu bewegen derart, daß die gegenwärtigen Lichtverteilungseigenschaften nach Wunsch zu anderen Lichtverteilungseigenschaften verschoben werden und umgekehrt, wobei die Hilfsabdeckung (6) einen Abschirmteil (6a) umfaßt, der eine Fläche hat, die groß genug ist, um den asymmetrischen Teil (4a) der Abschirmplatte (4) mit sich abzudecken, wenn die Hilfsabdeckung (6) in Aufwärtsrichtung verschiebbar versetzt wird, um die oberste Position zu erreichen derart, daß es ermöglicht ist, daß der asymmetrische Teil (4a) unwirksam wird,
**gekennzeichnet** durch
Betätigungsmittel (7) zum linearen Verschieben der Hilfsabdeckung (6) in Aufwärts-/Abwärts-Richtung, wobei die Betätigungsmittel (7) eine Schraubeneinrichtung (71) aufweisen, die mit einem Halter (7a), der die Hilfsabdeckung (6) trägt, zusammenarbeitet, um diese durch Drehung der Schraubeneinrichtung (71) aufwärts/abwärts zu bewegen.

2. Vorrichtung nach Anspruch 1, dadurch gekennzeichnet, daß die Hilfsabdeckung (6) rechtwinklig gestaltet ist.

3. Beleuchtungsvorrichtung (1) des Projektortyps mit vorbestimmten Lichtverteilungseigenschaften für ein Fahrzeug, umfassend einen reflektierenden Spiegel (3), der eine umlaufende parabolische Fläche hat, eine Lichtquelle (2), die an dem Brennpunkt des reflektierenden Spiegels angeordnet ist, eine Abschirmplatte (4), die einen asymmetrischen Teil (4a) hat, der an einer Seite der Abschirmplatte (4) gebildet ist in Abhängigkeit von den vorbestimmten Lichtverteilungseigenschaften, und eine Projektionslinse (5), die am Vorderende der Beleuchtungsvorrichtung (1) des Projektortyps angeordnet ist, eine Hilfsabdeckung (8), die direkt neben der Abschirmplatte (4) verschiebbar angeordnet ist, um sich entlang der Abschirmplatte (4) verschiebbar zu bewegen derart, daß die gegenwärtigen Lichtverteilungseigenschaften nach Wunsch zu anderen Lichtverteilungseigenschaften verschoben werden und umgekehrt, wobei die Hilfsabdeckung (8) einen Abschirmteil (8a) umfaßt, der eine Fläche hat, die groß genug ist, um den asymmetrischen Teil (4a) der Abschirmplatte (4) mit sich abzudecken, wenn die Hilfsabdeckung (8) in Aufwärtsrichtung verschiebbar versetzt wird, um die oberste Position zu erreichen derart, daß es ermöglicht wird, daß der asymmetrische Teil (4a) unwirksam wird, gekennzeichnet durch
eine Betätigungseinrichtung (9) zum drehbaren Verschieben der Hilfsabdeckung (8) in Aufwärts-/Abwärts-Richtung, wobei die Betätigungseinrichtung (9) ein bogenförmiges langgestrecktes Loch (81), welches durch einen Teil (8b) äußeren Durchmessers der Hilfsabdeckung (8) hindurch gebildet ist, und eine Schraube (91) aufweist, die durch das langgestreckte Loch (81) hindurch eingesetzt und in ein Gewindeloch an einem Halter (9a) der Betätigungseinrichtung (9) schraubbar eingepaßt ist derart, daß die Hilfsabdeckung (8) in einer verschobenen Position festgelegt wird.

4. Vorrichtung nach Anspruch 3, dadurch gekennzeichnet, daß die Hilfsabdeckung (8) rund gestaltet ist.

5. Beleuchtungsvorrichtung (1) des Projektortyps mit vorbestimmten Lichtverteilungseigenschaften für ein Fahrzeug, umfassend einen reflektierenden Spiegel (3), der eine umlaufende parabolische Fläche hat, eine Lichtquelle (2), die an dem Brennpunkt des reflektierenden Spiegels angeordnet ist, eine Abschirmplatte (4), die einen asymmetrischen Teil (4a) hat, der an einer Seite der Abschirmplatte (4) gebildet ist in Abhängigkeit von den vorbestimmten Lichtverteilungseigenschaften, und eine Projektionslinse (5), die am vorderen Ende der Beleuchtungsvorrichtung (1) des Projektortyps angeordnet ist, dadurch gekennzeichnet, daß die Abschirmplatte (4) drehbar angebracht ist, um sie verschiebbar zu bewegen derart, daß die gegenwärtigen Lichtverteilungseigenschaften nach Wunsch zu anderen Lichtverteilungseigenschaften verschoben werden und umgekehrt, und daß eine Betätigungseinheit (10) vorgesehen ist, die ein bogenförmiges langgestrecktes Loch (11), welches durch einen Teil äußeren Durchmessers der Abschirmplatte (4) hindurch gebildet ist, und eine Schraube aufweist, die durch das langgestreckte Loch hindurch eingesetzt und in ein Gewindeloch an einem Halter der Betätigungseinheit schraubbar eingepaßt ist derart, daß die Abschirmplatte (4) in einer verschobenen Position festgelegt wird.

## Revendications

1. Dispositif d'éclairage du type phare (1) pour un véhicule ayant des propriétés prédéterminées de distribution de lumière, comprenant un miroir réflecteur (3) ayant une surface de révolution parabolique, une source lumineuse (2) située au foyer dudit miroir réflecteur, une plaque d'estompage (4) ayant une partie asymétrique (4a) formée d'un côté de ladite plaque d'estompage (4) en fonction desdites propriétés prédéterminées de distribution de lumière, et une lentille de projection (5) située à l'extrémité avant dudit dispositif d'éclairage du type phare (1), un obturateur auxiliaire (6) agencé de manière coulissante directement à côté de ladite plaque d'estompage (4) pour se déplacer de manière coulissante le long de ladite plaque d'estompage (4) de façon à transformer les propriétés courantes de distribution de lumière en d'autres propriétés souhaitées et vice versa, ledit obturateur auxiliaire (6) comprenant une partie d'estompage (6a) ayant une aire suffisamment grande pour couvrir ladite partie asymétrique (4a) de ladite plaque d'estompage (4) avec celle-ci quand ledit obturateur auxiliaire (6) est déplacé de manière coulissante vers le haut pour atteindre la position la plus haute de façon à permettre à ladite partie asymétrique (4a) de devenir inopérante, caractérisé par
des moyens d'actionnement (7) pour déplacer de façon linéaire ledit obturateur auxiliaire (6) vers le haut ou vers le bas, lesdits moyens d'actionnement (7) comprenant des moyens à vis (71) coopérant avec un support (7a) portant ledit obturateur auxiliaire (6) pour le déplacer vers le haut ou vers le bas en faisant tourner lesdits moyens à vis (71).

2. Dispositif selon la revendication 1, caractérisé en ce que ledit obturateur auxiliaire (6) est de forme rectangulaire.

3. Dispositif d'éclairage du type phare (1) pour un véhicule ayant des propriétés prédéterminées de distribution de lumière, comprenant un -miroir réflecteur (3) ayant une surface de révolution parabolique, une source lumineuse (2) située au foyer dudit miroir réflecteur, une plaque d'estompage (4) ayant une partie asymétrique (4a) formée d'un côté de ladite plaque d'estompage (4) en fonction desdites propriétés prédéterminées de distribution de lumière, et une lentille de projection (5) située à l'extrémité avant dudit dispositif d'éclairage du type phare (1), un obturateur auxiliaire (8) agencé de manière coulissante directement à côté de ladite plaque d'estompage (4) pour se déplacer de manière coulissante le long de ladite plaque d'estompage (4) de façon à transformer les propriétés courantes de distribution de lumière en d'autres propriétés désirées et vice versa, ledit obturateur auxiliaire (8) comprenant une partie d'estompage (8a) ayant une aire suffisamment grande pour couvrir ladite partie asymétrique (4a) de ladite plaque d'estompage (4) avec celle-ci quand ledit obturateur auxiliaire (8) est déplacé de manière coulissante vers le haut pour atteindre la position la plus haute de façon à permettre à ladite partie asymétrique (4a) de devenir inopérante, caractérisé par
des moyens d'actionnement (9) pour déplacer par rotation ledit obturateur auxiliaire (8) vers le haut ou vers le bas, lesdits moyens d'actionnement (9) comprenant un trou allongé arqué (81) formé à travers une partie de diamètre extérieur (8b) de l'obturateur auxiliaire (8) et une vis (91) insérée à travers ledit trou allongé (81) et engagée par filetage dans un trou fileté sur un support (9a) des moyens d'actionnement (9) de façon à fixer ledit obturateur auxiliaire (8) à une position déplacée.

4. Dispositif selon la revendication 3, caractérisé en ce que ledit obturateur auxiliaire (8) est de forme ronde.

5. Dispositif d'éclairage du type phare (1) pour un véhicule ayant des propriétés prédéterminées de distribution de lumière, comprenant un miroir réflecteur (3) ayant une surface de révolution parabolique, une source lumineuse (2) située au foyer dudit miroir réflecteur, une plaque d'estompage (4) ayant une partie asymétrique (4a) formée d'un côté de ladite plaque d'estompage (4) en fonction desdites propriétés prédéterminées de distribution de lumière, et une lentille de projection (5) située à l'extrémité avant dudit dispositif d'éclairage du type phare (1), caractérisé en ce que ladite plaque d'estompage (4) est montée d'une façon permettant la rotation pour se déplacer de manière coulissante de façon à transformer les propriétés courantes de distribution de lumière en d'autres propriétés désirées et vice versa, et en ce qu'une unité d'actionnement (10) est prévue, comprenant un trou allongé arqué (11) formé à travers une partie de diamètre extérieur de la plaque d'estompage (4) et une vis insérée à travers ledit trou allongé et engagée par filetage dans un trou fileté sur un support de l'unité d'actionnement de façon à fixer la plaque d'estompage (4) à une position déplacée.
